# EUROPÄISCHE PATENTANMELDUNG

(11) **EP 1 170 874 A1**
(43) Veröffentlichungstag der Anmeldung: **09.01.2002**
(21) Anmeldenummer: 00114445.0
(22) Anmeldetag: 05.07.2000
(51) Int. Cl.: H04B 1/40

(54) **Empfangseinrichtung, insbesondere für den Mobilfunk**

(71) Anmelder: Infineon Technologies AG, 81669 München (DE)
(72) Erfinder: Boos, Zdravko, 81827 München (DE)
(74) Vertreter: Hermann, Uwe, Dipl.-Ing.

(57) **Zusammenfassung**

Es ist eine Empfangseinrichtung, insbesondere für den Mobilfunk, angegeben, mit einem Empfangszweig mit erstem Mischer (M1) und nachgeschaltetem Analog/Digital-Wandler (AD). Ein Referenzgenerator (RG) erzeugt einen Referenztakt (RT), welcher durch ganzzahlige Multiplikation oder Division den Wandlern oder PLL-Synthesizern des Mischers zugeführt ist. Hierdurch ist ein besonders energie- und platzsparender Schaltungsaufbau mit geringen gegenseitigen Störungen der Signale realisiert, welcher insbesondere für UMTS geeignet ist. In einer bevorzugten Ausführungsform ist die Empfangseinrichtung durch Vorsehen eines Sendepfades zu einer Sende-Empfangs-Einrichtung weitergebildet.

## Beschreibung

Die Erfindung betrifft eine Hochfrequenz-Empfangseinrichtung, insbesondere für den Mobilfunk.

Der Mobilfunk-Standard GSM (Global System for Mobile Communication) ist in Deutschland und Europa sowie weiteren Ländern weit verbreitet. Die bestehenden GSM-Netze weisen eine hohe Flächendeckung auf.

Zur Übertragung größerer Datenmengen per Mobilfunk ist ein neuer Standard in Europa unter dem Namen Universal Mobile Telecommunication System (UMTS) und International unter den Namen IMT-2000 (International Mobile Telecommunication System 2000) bekannt. Während die Mobilfunkgeräte für den GSM-Standard auch als Geräte der zweiten Generation bezeichnet werden, sind die Mobilfunkgeräte für den UMTS- beziehungsweise IMT-2000-Standard unter der Bezeichnung Mobilfunkgeräte der dritten Generation bekannt.

Um einen weichen Übergang vom GSM- zum UMTS-Standard zu ermöglichen, ist es sinnvoll, daß die neuen Geräte der dritten Generation, bis eine flächendeckende Netzabdeckung bei UMTS gewährleistet ist, auch den GSM-Standard beherrschen.

Wichtige Entwicklungsziele beim Schaltungsentwurf für Empfangseinrichtungen im Mobilfunk sind eine hohe Integrationsdichte, um einen geringen Flächenbedarf sicherzustellen, geringe Energieaufnahme, um einen langen, netzunabhängigen Betrieb zu gewährleisten, die Abwärtskompatibilität zu vorhergehenden Standards sowie das Vermeiden beziehungsweise Unterdrücken unerwünschter Signale, beispielsweise durch Übersprechen.

Es ist bekannt, aus einem Referenztakt jede gewünschte Taktrate mit aufwendig realisierbaren, mit Bruchzahl-Verhältnissen arbeitenden PLL-Synthesizern abzuleiten.

Aufgabe der vorliegenden Erfindung ist es, eine Empfangseinrichtung, insbesondere für den Mobilfunk, anzugeben, welche für die beschriebenen Geräte der dritten Generation geeignet ist und bei der die Vermeidung beziehungsweise Unterdrückung unerwünschter Signale verbessert ist.

Erfindungsgemäß wird die Aufgabe von einer Empfangseinrichtung, insbesondere für den Mobilfunk, gelöst mit
- einem ersten Mischer, dem eingangsseitig ein Empfangssignal zuführbar ist, und an dem ausgangsseitig ein erstes Zwischenfrequenzsignal abgreifbar ist,
- einer ersten Phasenregelschleife, die mit dem ersten Mischer verbunden ist, und der ein erster Bezugstakt zuführbar ist,
- einem Analog/Digital-Wandler, der mit dem Ausgang des ersten Mischers verbunden ist, und dem ein erster Wandlertakt zuführbar ist,
- einem Referenzgenerator zur Erzeugung eines Referenztakts, wobei der Referenztakt ein ganzzahliges Vielfaches des ersten Bezugstakts und der erste Wandlertakt ein ganzzahliges Vielfaches des Referenztakts ist.

Der Erfindung liegt das Prinzip zugrunde, ein Takt-Verteilungskonzept anzugeben, bei dem die Analog/Digital-Wandler sowie die Mischer von einem Referenztakt versorgt werden, wobei der jeweilig benötigte Wandlertakt oder Bezugstakt durch Multiplikation oder Division mit ganzen Zahlen bildbar ist.

Es ist somit eine Ableitung der Bezugsfrequenz für die PLL-Stufen beziehungsweise Phasenregelschleifen angegeben, welche einfach realisierbar ist und die Benutzung von Frequenz-Synthesizern, die mit Bruchzahlen arbeiten, vermeidet.

Diese einfache, durch ganzzahliges Multiplizieren oder Dividieren mögliche Ableitung von Wandlertakten und Bezugstakten für die PLL-Stufen von Mischern ermöglicht die Realisierung einer Empfangseinrichtung mit geringem Energiebedarf, kleiner Chipfläche und Kostenersparnis.

Die Ansteuerung eines AD- oder DA-Wandlers durch ganzzahlige Ableitung des Wandlertakts aus einem quarzstabilisierten Referenztakt bringt den Vorteil geringer Jitter bei der AD-oder DA-Wandlung.

In einer vorteilhaften Ausführungsform der vorliegenden Erfindung ist
- ein zweiter Mischer vorgesehen, dem eingangsseitig ein zweites Zwischenfrequenzsignal zuführbar ist, und an dem ausgangsseitig ein Sendesignal abgreifbar ist,
- eine zweite Phasenregelschleife mit dem zweiten Mischer verbunden, der ein zweiter Bezugstakt zuführbar ist,
- ein Digital/Analog-Wandler, dem ein zweiter Wandlertakt zuführbar ist, an den Eingang des zweiten Mischers angeschlossen,
- wobei der Referenztakt ein ganzzahliges Vielfaches des zweiten Bezugstakts und der zweite Wandlertakt ein ganzzahliges Vielfaches des Referenztaktes ist.

Das Ansteuern von Wandlern und PLL-Stufen von Mischern in einem Sendezweig mit einem Takt, der jeweils ebenfalls durch Multiplikation oder Division mit einer ganzen Zahl aus dem Referenztakt hervorgeht, ermöglicht es, einen besonders energiesparenden und flächensparenden Schaltungsaufbau einer Empfangseinrichtung mit Sendeteil zu realisieren.

In einer weiteren, vorteilhaften Ausführungsform der vorliegenden Erfindung ist der erste Bezugstakt gleich dem zweiten Bezugstakt und der erste Wandlertakt gleich dem zweiten Wandlertakt. Hierdurch ist ein besonders einfacher Schaltungsaufbau bei geringem Energiebedarf und einer Verringerung bezüglich gegenseitigen Störungen zwischen Sende- und Empfangszweig angegeben.

In einer weiteren, vorteilhaften Ausführungsform der vorliegenden Erfindung ist dem Analog/Digital-Wandler ein erster digitaler Mischer nachgeschaltet, dem ein erster Interpolator nachgeschaltet ist, und dem Digital/Analog-Wandler ist ein zweiter digitaler Mischer vorgeschaltet, dem ein zweiter Interpolator vorgeschaltet ist.

Die digitalen Mischer dienen hauptsächlich zur automatischen Frequenzregelung. Der Analog/Digital-Wandler, welcher beispielsweise als ΣΔ-Wandler ausgeführt sein kann und welcher Tiefpaß-Eigenschaften aufweisen kann, bewirkt eine Reduzierung des Taktes. Um den durch den Analog/Digital-Wandler reduzierten, aus dem Referenztakt abgeleiteten Wandlertakt in einen gewünschten Takt zur digitalen Weiterverarbeitung der Daten umzuwandeln, ist der erste Interpolator vorgesehen. Der erste Interpolator kann aus mehreren, jeweils einfach aufgebauten Sub-Interpolatoren aufgebaut sein.

Die gewünschte Taktrate kann beispielsweise die Bitrate eines Spreizsignals, die sogenannte Chiprate, sein, welche um den Spreizfaktor höher als die Bitrate der Datenfolge ist. Hierdurch kann in einfacher Weise ein Codevielfachzugriff (Code Division Multiple Access, CDMA) unterstützt werden.

In dem den zweiten Mischer und den Digital/Analog-Wandler aufweisenden Sendezweig der Empfangseinrichtung wird ein dem zweiten Interpolator zuführbares Spreizsignal bezüglich seines Taktes so interpoliert, daß am Eingang des Digital/Analog-Wandlers eine Taktrate zur Verfügung steht, die im Digital/Analog-Wandler mit dessen vorgegebenem Interpolationsfaktor interpoliert wird.

In einer weiteren, vorteilhaften Ausführungsform der vorliegenden Erfindung weist der Analog/Digital-Wandler ein erstes digitales Filter und der Digital/Analog-Wandler ein zweites digitales Filter auf. Digitale Filter, wie sie beispielsweise bei ΣΔ-Wandlern üblich sind, reduzieren den Wandlertakt beispielsweise um den Faktor 8 oder andere Potenzen mit der Basis 2.

In einer weiteren, vorteilhaften Ausführungsform der vorliegenden Erfindung weisen der erste und der zweite Interpolator jeweils mehrere, seriell angeordnete Sub-Interpolatoren auf. Die Umsetzung des Taktes nach dem ersten digitalen Mischer beziehungsweise vor dem zweiten digitalen Mischer in die jeweils gewünschte Bitrate des Spreizsignals kann mit geringem Aufwand und guten Übertragungseigenschaften des Nutzsignals dadurch realisiert sein, daß jeweils ein Taktverhältnis in einem Sub-Interpolator realisiert ist, welches eine Bruchzahl aus kleinen Zahlen, wie beispielsweise 4, 5, 1, 3, 8, 13 ist.

Das modulare Prinzip mit mehreren, seriell angeordneten Sub-Interpolatoren hat weiterhin den Vorteil, daß mit sehr geringem Aufwand eine Anpassung an die jeweils erforderliche Bitrate des Spreizsignals möglich ist, beispielsweise für das Chinesische TD SCDMA-System mit einer zusätzlichen Division durch 3.

In einer weiteren, vorteilhaften Ausführungsform der vorliegenden Erfindung weist der Referenztakt eine Taktfrequenz von 13 MHz auf. Dies ist dadurch besonders vorteilhaft, daß mit dem vorliegenden Schaltungsprinzip für Mobilfunkgeräte der dritten Generation der gleiche Referenztakt verwendet werden kann, wie er üblicherweise für Mobilfunkgeräte der zweiten Generation verwendet wurde. Dies führt zu einem besonders geringen Flächen- und Energiebedarf der Schaltung. Somit ist außerdem eine einfache Integration einer Sende- und Empfangseinrichtung, welche sowohl GSM-Standard als auch UMTS-Standard unterstützen kann, angegeben.

In einer weiteren, vorteilhaften Ausführungsform der vorliegenden Erfindung beträgt die Taktfrequenz des Referenztakts 40 MHz. Dies hat den Vorteil, daß bei einer Ausführung des Sendepfades als Superheterodyn-Sender mit einer Zwischenfrequenz von 190 MHz die Harmonischen des Referenztakts nicht in das Zwischenfrequenzband fallen.

Weitere Einzelheiten sind in den Unteransprüchen angegeben.

Die Erfindung wird nachfolgend an mehreren Ausführungsbeispielen anhand der Zeichnungen näher erläutert.

### Es zeigen:

- Figur 1: die prinzipielle Schaltungsanordnung einer Empfangseinrichtung gemäß der Erfindung,
- Figur 2: eine Weiterbildung der Empfangseinrichtung von Figur 1 und
- Figur 3: ein weiteres Ausführungsbeispiel der vorliegenden Erfindung gemäß Figur 1, angewendet auf einen UMTS-Transceiver.

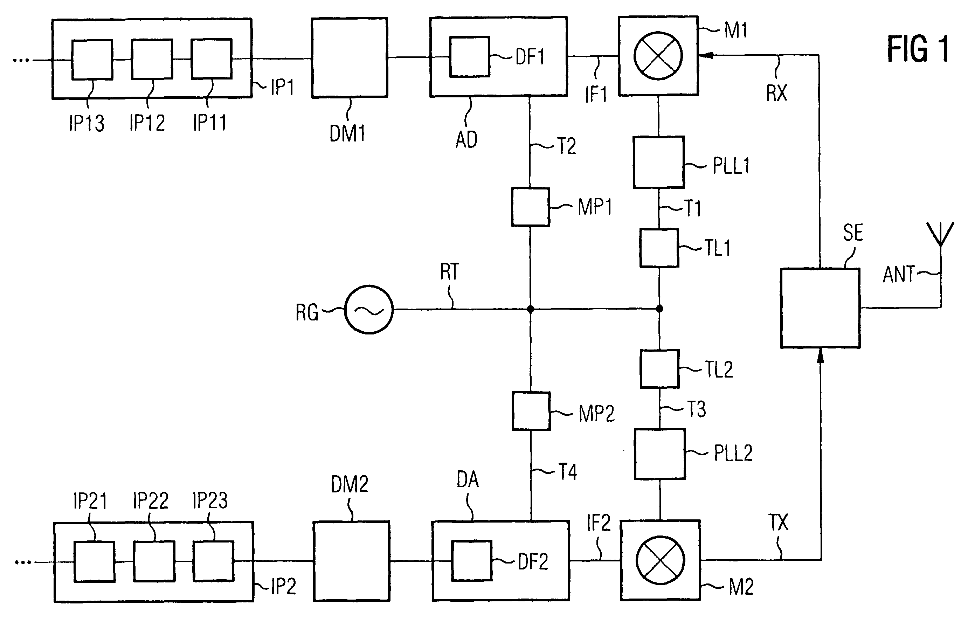

Figur 1 zeigt eine Empfangseinrichtung mit Sendeteil, wobei ein Empfangspfad und ein Sendepfad mit einer Sende-Empfangs-Umschaltung SE an eine Antenne ANT angeschlossen sind. Dabei zeigt der obere Zweig in Figur 1 den Empfangspfad, während der untere Zweig den Sendezweig darstellt. Ein Empfangssignal RX wird eingangsseitig an einen ersten Mischer M1 geführt, mit dem es unter Verwendung einer zusätzlichen, lokal erzeugten Oszillatorfrequenz auf eine Zwischenfrequenzebene mit einer ersten Zwischenfrequenz IF1 heruntergemischt wird. Das erste Zwischenfrequenzsignal IF1 wird anschließend einem Analog/Digital-Wandler AD zugeführt, der ein erstes digitales Filter DF1 aufweist. Sowohl der erste Mischer M1 als auch der Analog/Digital-Wandler AD benötigen für ihren Betrieb eine Taktfrequenz, welche aus einem Referenztakt RT abgeleitet wird. Hierzu ist ein Referenzgenerator RG vorgesehen, der einen Referenztakt RT oder Master-Takt erzeugt. Der für die Bezugsfrequenz der mit dem ersten Mischer verbundenen PLL-Stufe PLL1 erforderliche, erste Bezugstakt T1 wird mittels Division durch eine ganze Zahl (Integer) aus dem Referenztakt RT abgeleitet. Die für den Betrieb des Analog/Digital-Wandlers AD erforderliche erste Wandlertakt-Frequenz T2 wird von einem Multiplikator-Baustein MP1 zur Verfügung gestellt, der den Referenztakt RT mit einer ganzen Zahl, die 1 sein kann, multipliziert. Somit ist der erste Wandlertakt T2 ein ganzzahliges Vielfaches des Referenztakts RT. Dem Analog/Digital-Wandler AD ist weiterhin ein erster digitaler Mischer DM1 nachgeschaltet, der zur automatischen Frequenzregelung (AFC) im Empfänger dient. Schließlich ist dem ersten digitalen Mischer DM1 ein Interpolator-Baustein IP1 nachgeschaltet, welcher mehrere, seriell angeordnete Sub-Interpolatoren IP11, IP12, IP13 aufweist. Zur digitalen Weiterverarbeitung des Nutzsignals im Empfangszweig können beispielsweise Funktionseinheiten zur Sprachverarbeitung angeordnet sein, welche nicht eingezeichnet sind.

Der Sendezweig gemäß Figur 1 ist in Analogie zum Empfangszweig aufgebaut, mit einem Interpolator IP2 mit seriell angeordneten Sub-Interpolatoren IP21, IP22, IP23, sowie einen dem zweiten Interpolator IP2 nachgeschalteten zweiten digitalen Mischer DM2 zur automatischen Frequenzkontrolle (AFC). Diesem ist im Sendezweig ein Digital/Analog-Wandler DA, welcher ein digitales Filter DF2 aufweist, nachgeschaltet, sowie ein zweiter Mischer M2 zur Zuführung des zweiten Zwischenfrequenz-Signals IF2 an den Eingang des zweiten Mischers M2. Der Ausgang des zweiten Mischers M2 ist über die Sende-Empfangs-Umschaltung SE an die Antenne ANT anschließbar. Der zum Betrieb des Digital/Analog-Wandlers DA erforderliche zweite Wandlertakt T4 geht durch Multiplikation mit einer ganzen Zahl in der Multiplikatorstufe MP2 aus dem Referenztakt RT hervor; der für den Betrieb der mit dem zweiten Mischer M2 verbundenen zweiten PLL-Stufe PLL2 erforderliche zweite Mischertakt T3 geht durch Division mit einer ganzen Zahl in der Teilerstufe TL2 aus dem Referenztakt RT hervor.

Die Schaltung gemäß Figur 1 hat den Vorteil, daß die Multiplizier- beziehungsweise Dividierstufen zur Versorgung der entsprechenden Bausteine mit einem Referenztakt einfach aufgebaut sind, da sie keine Realisierungen von Bruchzahl-Verhältnissen erfordern. Außerdem ist hierdurch ein geringer Energiebedarf sowie eine geringe Chipfläche erforderlich. Wenn der Analog/Digital-Wandler AD beispielsweise ein Takt-Reduzierungsverhältnis von 8 aufweist, was durch das im Analog/Digital-Wandler AD enthaltene digitale Filter DF1 bedingt sein kann, so wird eine entsprechend reduzierte Taktrate über den ersten digitalen Mischer DM1 der ersten Interpolatorstufe IP1 zugeführt. Diese realisiert die Umsetzung des reduzierten Takts in die gewünschte Bitrate des Spreizsignals, welche bei UMTS bei 3,84 MHz beziehungsweise 1,28 MHz für China liegt. Der modulare Aufbau des ersten und zweiten Interpolators IP1, IP2 ermöglicht es, beispielsweise einen der Sub-Interpolatoren für einen Faktor 3 beziehungsweise ein Drittel auszulegen, der je nach Bestimmungsland beziehungsweise Spezifikation in einfacher Weise überbrückt werden kann. Bevorzugte Teilerverhältnisse der Sub-Interpolatoren sind beispielsweise 8/5, 4/5, 3/5, 1/5, 8/13 und 1/3. Das gesamte Teilerverhältnis des ersten Interpolators IP1 ergibt sich durch Multiplikation der Teilerverhältnisse der Sub-Interpolatoren.

Für die US-amerikanischen Systeme CDMA 2000 und IS-95, welche mit Spreizsignal-Bitraten (chip rates) von 3,6864 Mcps (megachip per second) bzw. 1,2288 Mcps arbeiten kann mit Subinterpolator-Teilerverhältnissen von 6/5 und 4/5 bzw. 6/5 und 2/5 in einfacher Weise eine Schaltungsanpassung erreicht werden.

Bevorzugte, ganzzahlige Teilerverhältnisse der Teiler TL1, TL2 liegen bei 8, 40 oder 200. In Abweichung der Darstellung gemäß Figur 1 kann bei gleichen Multiplikator- und Teilerverhältnissen jeweils ein Teiler-Baustein beziehungsweise Multiplikator-Baustein für einen besonders geringen Flächenbedarf wegfallen. Zusätzlich kann durch das Anschließen der beiden Wandler AD, DA beziehungsweise der beiden Mischer M1, M2 an eine gemeinsame Multiplizier- beziehungsweise Teilerstufe eine unerwünschte, gegenseitige Beeinflussung von Signalen auf dem integrierten Schaltkreis vermieden werden.

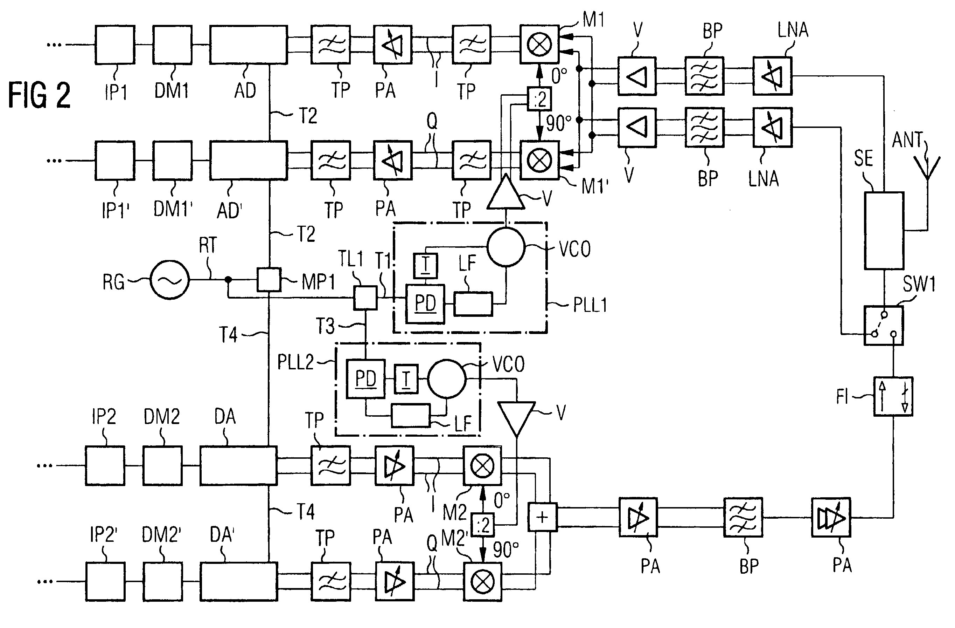

Figur 2 zeigt eine Weiterbildung der Empfangseinrichtung gemäß Figur 1. Dabei ist zu erkennen, daß der in der oberen Zeichnungshälfte dargestellte Empfangsteil zwei Empfangspfade mit jeweils einem rauscharmen Vorverstärker LNA, einem nachgeschalteten Bandpaß-Filter BP sowie einen Verstärker V aufweisen. Dies ist bei den für UMTS vorgesehenen Frequenzduplex- und Zeitduplex-Verfahren sinnvoll, da die jeweiligen Frequenzbänder so leichter zu trennen und zu verarbeiten sind. Der direkt an die Sende-Empfangs-Weiche SE angeschlossene, obere Empfangspfad dient zur Übertragung im Frequenzduplex (FDD)-Betrieb, der untere Empfangspfad dient zum Empfangen im TDD (Zeitduplex)-Betrieb. Hierfür ist zur Umschaltung ein Schalter SW1 vorgesehen. Da der in Figur 2 dargestellte Empfangsteil der Schaltung als Empfänger mit einem 0 Mhz-Zwischenfrequenzkonzept (Zero IF) ausgeführt ist und zusätzlich hohe Datenübertragungsraten zu erwarten sind, ist der Empfangsteil in die Quadraturkomponenten I, Q aufgeteilt. Hierzu sind zwei erste Mischer M1, M1' vorgesehen, denen ein Lokal-Oszillator-Signal einmal phasenrichtig und einmal um 90° phasenversetzt zugeführt wird. Dieses Lokal-Oszillator-Signal wird in einer PLL-Stufe PLL1 erzeugt, wobei die für die erste PLL-Stufe PLL1 benötigte Bezugsfrequenz, das heißt der erste Mischertakt T1 in einem ersten, ganzzahligen Teiler TL1 aus dem Referenztakt RT abgeleitet wird. Die Phasenregelschleifen PLL1, PLL2 weisen jeweils einen Phasendetektor PD zum Vergleich der Phasenlage mit der Phasenlage des Mischertakts T1, T2 auf, sowie einen Teiler T, einen spannungsgeregelten Oszillator VCO sowie ein Schleifenfilter LF.

Ebenso wie die Empfangsseite ist auch die Sendeseite in Quadraturkomponenten I, Q aufgeteilt. Dabei sind zur Signalaufbereitung regelbare Verstärker PA sowie Tiefpaß-Filter TP sendeseitig und empfangsseitig vorgesehen. Aufgrund der in der Zwischenfrequenzebene vorgesehenen Quadraturkomponenten des Signals I, Q sind zwei zweite Mischer M2, M2' vorgesehen, denen ein von der zweiten Phasenregelschleife PLL2 generiertes und in einem Verstärker V verstärktes Lokal-Oszillator-Signal einmal phasenrichtig und einmal um 90° phasenverschoben zugeführt wird. An die Ausgänge der zweiten Mischer M2, M2' ist ein Addierer angeschlossen, dem weitere, regelbare Leistungsverstärker PA sowie Bandpaß-Filter BP nachgeschaltet sind. Weiterhin ist zur Isolation von Sender und Empfänger ein Richtungsfilter FI vorgesehen.

Der Referenzgenerator RG gemäß Figur 2 weist eine Taktfrequenz von 13 MHz auf. Der Teiler TL1 zum Herunterteilen des Referenztakts RT in einer ganzzahligen Division weist ein Teilerverhältnis von 13 oder 65 auf, so daß, wie gewünscht, die ersten und zweiten Mischer M1, M1', M2, M2' eine Schrittweite von 1 MHz oder 200 KHz aufweisen. Empfangsseitig weisen die Sub-Interpolatoren der ersten Interpolatoren IP1, IP1' Teilungsverhältnisse von 8/5, 4/5 und 8/13 auf, so daß eine Bitrate des Spreizsignals am Ausgang des ersten Interpolators von 3,84 MHz erzeugbar ist. Die Erzeugung einer Spreizsignal-Bitrate von 1,28 MHz, wie sie beispielsweise für China erforderlich ist, kann mit einem vierten Sub-Interpolator mit einem Teilerverhältnis von 1/3 realisiert sein. Selbstverständlich können die einzelnen Sub-Interpolatoren auch andere Teilerverhältnisse aufweisen. Der Multiplizierer MP1 zur Bereitstellung eines Wandlertakts weist einen Faktor von 3 auf. Da der Analog/Digital-Wandler AD, AD' jeweils eine Taktreduzierung von 2³ = 8 ausführt, steht an dessen Ausgang ein reduzierter Takt von 13 MHz · 3 / 8 = 4,875 MHz an. Die beschriebenen Sub-Interpolator-Teilerverhältnisse stellen dann ein Spreizsignal mit einer Bitrate von 3,84 MHz zur Verfügung.

Sendeseitig wird die Bitrate des Spreizsignals von 3,84 MHz durch umgekehrte Teilerverhältnisse der Sub-Interpolatoren des zweiten Interpolators IP2, IP2' von 5/8, 5/4 und 13/8 in eine Taktfrequenz von 4,875 MHz gewandelt, welche mit dem Interpolationsfaktor von 8, den die Digital/Analog-Wandler DA, DA' aufweisen, sowie dem Wandlertakt von 3 · 13 MHz die gewünschte Taktrate ergeben.

Die Schaltung gemäß Figur 2 ermöglicht eine einfache, mit geringem Flächenbedarf realisierbare Empfangseinrichtung mit Sendeteil, da der für GSM übliche Systemtakt von 13 MHz, der mit üblichen Quarzen generierbar ist, weiterverwendet werden kann. Somit ist es mit der Empfangseinrichtung mit Sendeteil gemäß Figur 2 möglich, gleichzeitig im GSM-Modus zu empfangen, während im UMTS-Modus gesendet wird oder umgekehrt.

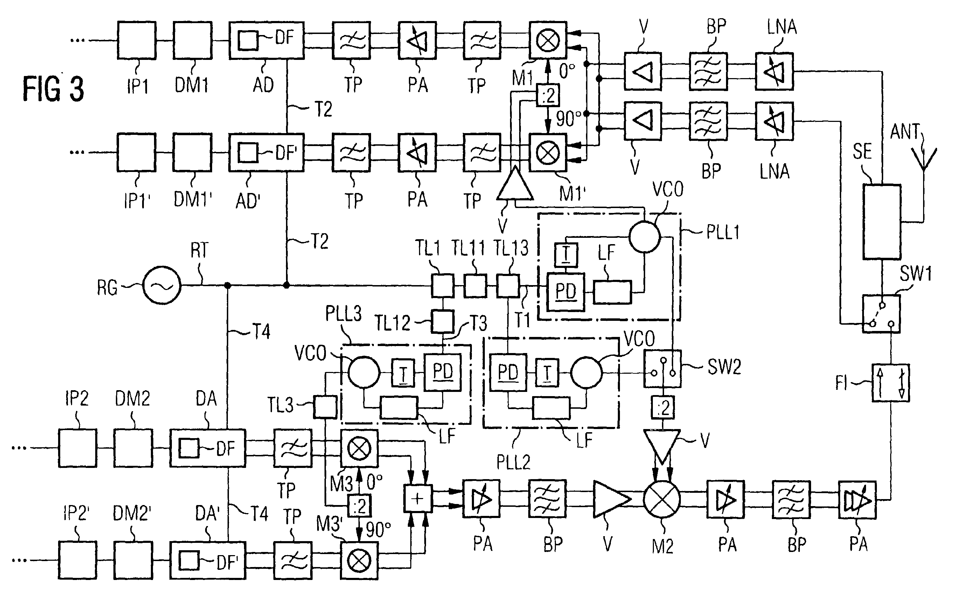

Figur 3 schließlich zeigt ein Ausführungsbeispiel der Empfangseinrichtung gemäß Figur 1, weitergebildet für einen UMTS-Empfänger mit Sendeteil. Im Unterschied zu der Empfangseinrichtung gemäß Figur 2 ist bei Figur 3 im Sendeteil eine Heterodyn-Architektur mit einer Zwischenfrequenz von 190 MHz ausgeführt. Da somit zwei Mischer- beziehungsweise Frequenzumsetzerstufen M2, M3, M3' ausgeführt sind, wird für die dritten Mischer M3, M3' ein weiterer PLL-Synthesizer PLL3 benötigt.

In Abweichung von der Schaltung gemäß Figur 2 ist bei der Schaltung gemäß Figur 3 kein ganzzahliger Multiplizierer zur Ableitung des Wandlertakts für die Analog/Digital-Wandler AD, AD' sowie die Digital/Analog-Wandler DA, DA' erforderlich, da der Referenztakt 40 MHz beträgt und direkt als Wandlertakt verwendbar ist. Der Teilungsfaktor, welcher ganzzahlig ist, zur Ableitung der Bezugstakte für die Phasendetektoren PD der PLL-Stufen PLL1, PLL2, PLL3, welcher mit den Teilern TL1, TL11, TL12, TL13 realisierbar ist, beträgt insgesamt 8 oder 40 oder 200. Hierdurch sind Schrittweiten von 5 MHz, 1 MHz oder 200 KHz möglich. Selbstverständlich können die Teilungsfaktoren, abhängig von der erforderlichen Schrittweite der Mischer beziehungsweise PLL-Stufen, auch andere Teilungsverhältnisse, welche ganzzahlig sind, aufweisen. Die Analog/Digital-Wandler AD, AD' weisen jeweils einen Reduzierungsfaktor der Taktrate von 8 auf. Somit ist der Takt an ihren Ausgängen auf 5 MHz reduziert. In den Interpolatoren IP1, IP1' wird dieser reduzierte Takt, in Analogie zu der für Figur 2 beschriebenen Weise, in seriell angeordneten Sub-Interpolatoren, welche Teilungsverhältnisse von 8/5, 4/5 und 3/5 aufweisen, auf die gewünschte Bitrate des Spreizsignals von 3,84 MHz gebracht. Selbstverständlich können auch die Teilungsverhältnisse der Sub-Interpolatoren entsprechend abgewandelt werden, beispielsweise kann ein dritter Sub-Interpolator mit einem Teilungsverhältnis von 1/5 vorgesehen sein, wodurch sich eine Spreizsignal-Bitrate von 1,28 MHz ergibt, welche beispielsweise für China gefordert ist. Im Sendezweig ergeben sich hierzu reziproke Teilungsverhältnisse, wodurch die Sub-Interpolatoren Teilungsverhältnisse von 5/8, 5/4 und 5/3 aufweisen, um aus dem Spreizsignal-Takt beziehungsweise -Bitrate von 3,84 MHz den gewünschten Takt von 5 MHz abzuleiten. In den Digital/Analog-Wandlern DA, DA' erfolgt, wie bereits für Figur 2 beschrieben, durch Interpolation in den digitalen Filter DF, DF' der Wandler DA, DA' eine Erhöhung der Taktrate auf 40 MHz, wie im Empfangsteil. Um den Abstimmbereich für den zweiten Mischer M2 im Sendezweig gemäß Figur 3 zu erhöhen, beziehungsweise um den Abstimmbereich der PLL-Stufen gering zu halten, kann mit einem zweiten Schalter SW2 für den zweiten Mischer M2 zwischen erster PLL-Stufe PLL1 und zweiter PLL-Stufe PLL2 umgeschaltet werden. Diese Architektur ist vorteilhaft für die bei UMTS vorgesehenen, verschiedenen Betriebsarten und Frequenzbänder, wie FDD (Frequenzduplex), und TDD (Zeitduplex) sowie Frequenzduplex mit variablem Duplexabstand. Die beschriebene Schaltungsanordnung, insbesondere der beschriebene Aufbau mit der Referenztakt-Verteilung mittels ganzzahliger Teiler sowie die direkte Referenztakt-Zuführung an die Wandlerstufen ermöglicht einen sehr energiesparenden Schaltungsbetrieb, einen geringen Chipflächen-Bedarf von Realisierungen der Schaltung sowie ein geringes Interferenz-Level auf dem IC. Außerdem können die Wandlerstufen vorteilhaft mit einer Taktreduzierung beziehungsweise Takt-Interpolation von 2³ oder anderen Potenzen mit der Basis 2 arbeiten, was eine einfache Realisierung der Wandlerschaltungen ermöglicht.

Schließlich ermöglicht der modulare Aufbau der ersten und zweiten Interpolatoren IP1, IP1', IP2 und IP2' eine einfache Anpassung der Schaltungsanordnung an die in verschiedenen Ländern unterschiedlichen Bitraten der Spreizsignale bei Codevielfachzugriff CDMA.

Die vorgesehenen Sub-Interpolatoren in den Interpolatoren der Empfangseinrichtung können mit dem bekannten Multi-Rate-Processing arbeiten.

Die beschriebenen Empfangseinrichtungen sind so aufgebaut, daß unerwünschte Störsignale weitgehend reduziert sind beziehungsweise nicht in die Hochfrequenz- oder Zwischenfrequenz-Nutzbänder fallen.

Da die Taktraten verhältnismäßig niedrig sind, bleibt die Leistungsaufnahme gering.

Die Taktraten sind jedoch hoch genug, um einen Multi-Kanal-Empfang der Empfangseinrichtung sowie einen günstigen Reduzierungsfaktor von 8 in den AD-Wandlern zu ermöglichen.

## Patentansprüche

1. Empfangseinrichtung, insbesondere für den Mobilfunk, mit
- einem ersten Mischer (M1), dem eingangsseitig ein Empfangssignal (RX) zuführbar ist, und an dem ausgangsseitig ein erstes Zwischenfrequenzsignal (IF1) abgreifbar ist,
- einer ersten Phasenregelschleife (PLL1), die mit dem ersten Mischer (M1) verbunden ist, und der ein erster Bezugstakt (T1) zuführbar ist,
- einem Analog/Digital-Wandler (AD), der mit dem Ausgang des ersten Mischers verbunden ist, und dem ein erster Wandlertakt (T2) zuführbar ist,
- einem Referenzgenerator (RG) zur Erzeugung eines Referenztakts (RT), wobei der Referenztakt (RT) ein ganzzahliges Vielfaches des ersten Bezugstakts (T1) und der erste Wandlertakt (T2) ein ganzzahliges Vielfaches des Referenztakts (RT) ist.

2. Empfangseinrichtung nach Anspruch 1,
**dadurch gekennzeichnet,daß**
- ein zweiter Mischer (M2) vorgesehen ist, dem eingangsseitig ein zweites Zwischenfrequenzsignal (IF2) zuführbar ist, und am dem ausgangsseitig ein Sendesignal (TX) abgreifbar ist,
- eine zweite Phasenregelschleife (PLL2) mit dem zweiten Mischer (M2) verbunden ist, der ein zweiter Bezugstakt (T3) zuführbar ist,
- ein Digital/Analog-Wandler (DA), dem ein zweiter Wandlertakt (T4) zuführbar ist, an den Eingang des zweiten Mischers (M2) angeschlossen ist,
- wobei der Referenztakt (RT) ein ganzzahliges Vielfaches des zweiten Bezugstakts (T3) und der zweite Wandlertakt (T4) ein ganzzahliges Vielfaches des Referenztakts (RT) ist.

3. Empfangseinrichtung nach Anspruch 2,
**dadurch gekennzeichnet,daß**
der erste Bezugstakt (T1) gleich dem zweiten Bezugstakt (T3) und der erste Wandlertakt (T2) gleich dem zweiten Wandlertakt (T4) ist.

4. Empfangseinrichtung nach Anspruch 2 oder 3,
**dadurch gekennzeichnet,daß**
dem Analog/Digital-Wandler (AD) ein erster digitaler Mischer (DM1) nachgeschaltet ist, dem ein erster Interpolator (IPI) nachgeschaltet ist, und daß dem Digital/Analog-Wandler (DA) ein zweiter digitaler Mischer (DM2) vorgeschaltet ist, dem ein zweiter Interpolator (IP2) vorgeschaltet ist.

5. Empfangseinrichtung nach einem der Ansprüche 2 bis 4,
**dadurch gekennzeichnet,daß**
der Analog/Digital-Wandler (AD) ein erstes digitales Filter (DF1) aufweist, und der Digital/Analog-Wandler (DA) ein zweites digitales Filter (DF2) aufweist.

6. Empfangseinrichtung nach einem der Ansprüche 2 bis 5,
**dadurch gekennzeichnet,daß**
der erste und der zweite Interpolator (IP1, IP2) jeweils mehrere, seriell angeordnete Sub-Interpolatoren (IP11, IP12, IP13, IP21, IP22, IP23) aufweisen.

7. Empfangseinrichtung nach einem der Ansprüche 2 bis 6,
**dadurch gekennzeichnet,daß**
der Referenztakt (RT) eine Taktfrequenz von 13 MHz aufweist.

8. Empfangseinrichtung nach einem der Ansprüche 2 bis 6,
**dadurch gekennzeichnet,daß**
der Referenztakt eine Taktfrequenz von 40 MHz aufweist.

9. Empfangseinrichtung nach einem der Ansprüche 2 bis 8,
**dadurch gekennzeichnet,daß**
der erste und der zweite Wandlertakt (T2, T4) gleich dem Referenztakt (RT) sind.
